# EUROPEAN PATENT APPLICATION

(11) **EP 4 729 485 A1**
(43) Date of publication of application: **22.04.2026**
(21) Application number: 24207431.8
(22) Date of filing: 18.10.2024
(51) Int. Cl.: C01G 53/05, C01G 53/42, C01G 53/84

(54) **METHOD FOR PREPARING A PRECURSOR FOR CATHODE ACTIVE MATERIAL FOR LITHIUM-ION BATTERIES**

(71) Applicant: Umicore Battery Materials Finland Oy, 67900 Kokkola (FI)
(72) Inventor: PAKARINEN, Aliisa, 67900 Kokkola (FI)
(74) Representative: Umicore RDI Patent Department

(57) **Abstract**

A method for manufacturing a precursor for cathode active material for lithium-ion batteries, the precursor comprising particles, presented by a general formula NiₓMn_{y}Co_{z}AₐOᵥ(OH)₂₋ᵥ, wherein 0<v≤2, 0.30≤x≤0.99, 0.01≤y≤0.85, 0.01≤z≤0.40, A being one or more elements, with 0≤a≤0.1, and x+y+z+a=1; and
wherein the method comprises carrying out a co-precipitation process by combining and mixing potassium hydroxide solution and metal salt solution under reaction conditions, said reaction conditions comprising an oxidative condition and a temperature of 70-90° C, thereby obtaining a slurry comprising a solid phase and a liquid phase, said solid phase comprising the precursor.

## Description

### TECHNICAL FIELD

In general, the present disclosure relates to methods for manufacturing a precursor for cathode active material for lithium-ion batteries, as well as the resulting precursors and the resulting cathode active material.

### BACKGROUND

Lithium-ion secondary batteries typically comprise a negative electrode (anode), an electrolyte, and a positive electrode (cathode) containing a lithium-transition metal oxide as the active material for lithium insertion and desorption. These cathode active materials (CAM) are commonly produced from transition-metal hydroxides, oxides, oxyhydroxides, or carbonate, collectively known as precursors (pCAM). These precursors are usually synthesized through co-precipitation processes in a reaction vessel, which involve mixing a metal salt solution with an alkaline solution, also known as precipitant or precipitating agent, and usually in the presence of a complexing agent. Sodium hydroxide (NaOH) is the most commonly used precipitant in the co-precipitation process, and commonly used transition metals include nickel, manganese, and cobalt.

As the physical and chemical properties of cathode active materials are closely related to their precursors, it is essential to manufacture these precursors with predetermined quality that meet the performance requirements of the cathode active material. Generally, the manufactured precursors may contain impurities such as potassium, calcium, magnesium, sulfate radicals, chloride radicals, sodium, and/or alike. These impurities can negatively impact the performance of lithium-ion batteries. Specifically, it is generally believed that they can deteriorate reactions with lithium, leading to reduced efficiency and lifespan of the batteries. Additionally, it is generally believed that these impurities do not significantly contribute to the charge and discharge reactions, making their presence undesirable. Although approaches for removing these impurities have been proposed, for example post treating the precipitate after the co-precipitation process, such as by washing, they remain insufficient. For instance, after precipitation, trace amounts of sodium (Na) remain in the pCAM and cannot be entirely eliminated or washed away.

### SUMMARY

An object of the present disclosure is to provide improved methods for preparing cathode active material precursor with low impurities.

In a first aspect, the present disclosure provides a method for manufacturing a particulate material as precursor for cathode active material for lithium-ion batteries, the precursor comprising particles, presented by a general formula NiₓMn_{y}Co_{z}AₐOᵥ(OH)₂₋ᵥ, wherein 0<v≤2, 0.30≤x≤0.99, 0.01≤y≤0.85, 0.01≤z≤0.40, A being one or more elements with 0≤a≤0.05, and x+y+z+a=1; and wherein the method comprises carrying out a co-precipitation process by combining and mixing potassium hydroxide solution and metal salt solution under reaction conditions, said reaction conditions comprising an oxidative condition and a temperature of 70-90° C, thereby obtaining a slurry comprising a solid phase and a liquid phase, said solid phase comprising the precursor.

The process features outlined in this disclosure have now been found to reduce impurities, particularly alkali metals, in the manufactured precursor.

Thus, in a second aspect, the present disclosure provides a particulate material as precursor for cathode active material for lithium-ion batteries, the precursor comprising particles, presented by a general formula NiₓMn_{y}Co_{z}AₐOᵥ(OH)₂-ᵥ, wherein 0<v≤2, 0.30≤x≤0.99, 0.01≤y≤0.85, 0.01≤z≤0.40, A being one or more elements, with 0≤a≤0.1, and x+y+z+a=1; and a content of potassium in the precursor is 0-20 ppm, preferably at most 15 ppm, and more preferably at most 10 ppm, as determined by ICP. Preferably, also a content of sodium in the precursor is 0-20 ppm, more preferably at most 15 ppm, and even more preferably at most 10 ppm, as determined by ICP. Even more preferably, a content of alkali metals in the precursor is 0-20 ppm, more preferably at most 15 ppm, and even more preferably at most 10 ppm, as determined by ICP.

Various embodiments of the present disclosure are disclosed in the claims and the description. The embodiments and examples recited in the claims and description are freely combinable with one another, unless otherwise expressly stated. Throughout the disclosure, where numerical ranges are given, the ranges include endpoint values unless otherwise expressly stated.

### DETAILED DESCRIPTION

While this disclosure describes several embodiments, it will be understood by those skilled in the art that various changes can be made, and equivalents can be substituted for elements thereof without departing from the scope of the disclosed embodiments. In addition, many modifications can be made to adapt a particular situation or material to the teachings of this disclosure without departing from the scope thereof. Therefore, this disclosure is not intended to be limited to the particular embodiments disclosed as the best mode contemplated for carrying out this disclosure. It should also be understood that the embodiments disclosed herein are to be considered only in a descriptive sense and not for purposes of limitation. Descriptions of features or aspects of each example should be considered as available for other similar features or aspects of other embodiments.

The term "comprising", as used herein and in the claims, should not be interpreted as being restricted to the means listed thereafter; it does not exclude other elements or steps. It needs to be interpreted as specifying the presence of the stated features, integers, steps, or components as referred to, but does not preclude the presence or addition of one or more other features, integers, steps or components, or groups thereof. Thus, the scope of the expression "a composition comprising components A and B" should not be limited to compositions consisting only of components A and B. It means that with respect to the present disclosure, the only relevant components of the composition are A and B. Accordingly, the terms "comprising" and "including" encompass the more restrictive terms "consisting essentially of" and "consisting of".

In this specification, if any numerical ranges are provided, the ranges include also the upper and lower end values.

In this specification, the term "at least" encompasses the concept of "equal to and/or more than", and the term "at most" encompasses the concept of "equal to and/or less than".

The expression "at least one of Item A, Item B, and Item C" or alike means that at least one of the three items (Item A, Item B, or Item C) is included or present. It could be any one of them, any two of them, or all three of them.

In the present disclosure, solutions are preferably aqueous solutions, when applicable.

As used herein, the term "and/or," when used in a list of two or more items, means that any one of the listed items can be employed by itself, or any combination of two or more of the listed items, can be employed.

Relational terms, such as first and second, top and bottom, and the like, are used solely to distinguish one entity or action from another entity or action, without necessarily requiring or implying any actual such relationship or order between such entities or actions.

It must be noted that, as used in this specification and the appended claims, the singular forms "a," "an," and "the" include plural referents unless the context clearly dictates otherwise.

The terms "ammonia (NH₃) concentration in a solution", "concentration of NH_{3(aq)}" or the like as used herein refers to the quantified amount of ammonia present in an aqueous solution. This concentration is expressed in grams per liter (g/l) and is determined through titration conducted at room temperature, typically around 20°C. In the present disclosure all given pH values refer to values which are measured at a temperature of 20 °C, unless otherwise stated.

The particulate material as described in this disclosure can serve as a precursor for the cathode active material. Thus, the term 'precursor' is used interchangeably with 'particulate material' within this context.

The present disclosure provides a method for manufacturing a precursor for cathode active material for lithium-ion batteries, the precursor comprising particles, presented by a general formula NiₓMn_{y}Co_{z}AₐOᵥ(OH)₂₋ᵥ, wherein 0<v≤2, 0.30≤x≤0.99, 0.01≤y≤0.85, 0.01≤z≤0.40, A being one or more elements with 0.01≤a≤0.05, and x+y+z+a=1; and wherein the method comprises carrying out a co-precipitation process by combining and mixing potassium hydroxide solution and metal salt solution under reaction conditions, said reaction conditions comprising an oxidative condition and a temperature of 70-90° C, thereby obtaining a slurry comprising a solid phase and a liquid phase, said solid phase comprising the precursor.

The precursor according to the present disclosure may be presented by a general formula NiₓMn_{y}Co_{z}AₐOᵥ(OH)₂₋ᵥ. The precursor according to the present disclosure may also be presented as M-Oᵥ(OH)₂₋ᵥ, wherein M is mixed metals comprising:
- Ni in a content x', wherein 30.0 ≤ x' ≤ 99.0 mol%, relative to M,
- Mn in a content y', wherein 1.0 ≤ y' ≤ 85.0 mol%, relative to M,
- Co in a content z', wherein 1.0 ≤ z' ≤ 40.0 mol%, relative to M,
- A in a content a', 0.0≤a'≤ 10.0 mol%, relative to M;
wherein x', y', z', and a' are measured by ICP-OES; and wherein x'+y'+z'+a' is 100.0 mol%. It can be understood that the expression ≥0 in the chemical formulas includes the absence of an element, and that the expression of O*ᵥ*(OH)*₂₋ᵥ*, wherein 0 < v ≤ 2, refers to partly oxidized metal hydroxide, oxyhydroxide, oxide or any combination thereof. Preferably v<2, for example v<1.5, v<1.0, v<0.75, or v<0.5. Preferably A is a dopant, more preferably A comprises at least one element selected from the group consisting of Al, Ti, V, Mg, Cr, Ca, Zr, Nb, Mo, Hf, Ta, and W. In some embodiments, 0<v<2, preferably 0.1≤v≤1.9. In some embodiments, 0.60≤x, preferably 0.70≤x, more preferably 0.90≤x. In some embodiments, y≤0.70, preferably y≤0.50, more preferably y≤0.30. In some embodiments, 0.85≤x and y≤0.10.

The combined characteristics according to the present disclosure, particularly the use of potassium hydroxide solution, the oxidative condition, and the specific temperature range, surprisingly contributes to a simple and effective way to manufacture precursor with reduced impurities, especially alkali metal impurities.

The co-precipitation process may be carried out in a stirred tank reactor having a reaction vessel equipped with means for stirring and feeding the reaction solutions, including metal salt solution and KOH solution. The co-precipitation process may be carried out in a batch-operated stirred tank reactor or a continuous stirred tank reactor, or in combination. For example, the co-precipitation may be carried out in a multi-step manner, where a seed slurry is first prepared, advantageously in a continuously operated stirred tank reactor, followed by one or more process steps in which the particles of the seed slurry are further grown to their target median particle size D50 in a batch-operated stirred tank reactor or reactors. A batch-operated stirred tank reactor may be equipped with a concentrator, also known as a clarifier. Such a concentrator, which is a filtering unit or device connected to a suction system, removes the mother liquor from the reactor during the precipitation processes, retaining the particles withing the reactor to increase the solid content.

In some embodiments, the potassium hydroxide (KOH) solution has a KOH concentration of 100-300 g/L, preferably 150-250 g/L. Using higher concentrations of KOH typically enhances process efficiency by increasing throughput and reducing water usage. However, excessively high concentrations can lead to the crystallization of K₂SO₄ due to its low solubility, which in turn might block the suction system. When KOH solution is used as the precipitant in the co-precipitation process, sodium (Na) is substantially absent in the manufactured precursor, for example in a content of 0-20 ppm, such as at most 10 ppm, at most 5 ppm, or at most 2 ppm. Furthermore, it is observed that using KOH solution as the precipitant results in a significantly lower potassium (K) content in the manufactured precursor compared to the sodium (Na) content when NaOH solution is used as the precipitant under otherwise identical reaction conditions.

In some embodiments, the co-precipitation may include admixing a complexing agent solution. A complexing agent used in the co-precipitation process may contribute to control of precipitation rate and ensure a uniform distribution of metal ions and controlled particle growth. Complexing agents may also reduce impurities in the precipitate by selectively binding to unwanted ions or minimizing the incorporation of impurities into the precipitate. In some embodiments, ammonium ion-containing solution is used as a complexing agent which may include, but not be limited to, NH₄OH, (NH₄)₂SO₄, NH₄NO₃, NH₄Cl, CH₃COONH₄, NH₄CO₃, or a combination thereof. For example, the ammonium ion-containing solution may be an ammonia aqueous solution, also known as ammonia water, ammonium hydroxide, ammonia liquor, aqua ammonia, or aqueous ammonia, i.e. a solution of ammonia in water. It can be denoted by the symbols NH_{3(aq)}. In some embodiments, the co-precipitation can be conducted under the condition so, that the NH_{3(aq)} concentration is kept 2-12 g/L, depending on the target pH of the reaction. For example NH_{3(aq)} concentration may be kept at 3-5 g/L when target pH is 12.1 ± 0.1, or 8-10 or 10-12 g/L when target pH is higher, such as 12.5 ± 0.1.

Typically, co-precipitation takes place in a sealable reactor vessel equipped with inlets for solution feeding and atmosphere control, among others. The co-precipitation generally may include a nucleation step and a particle growth step. Co-precipitation for nucleation can be conducted in the same reactor vessel as particle growth or in a separate one. If performed in a different vessel, particle growth begins with a pre-manufactured seed slurry derived from the nucleation co-precipitation process.

According to the present disclosure, the co-precipitation is conducted under oxidative conditions. According to the present disclosure, oxidative conditions refer to environments that at least partially oxidize the precursor. By "at least partially oxidize the precursor" it is meant that the precursor is presented by the general formula NiₓMn_{y}Co_{z}AₐOᵥ(OH)₂₋ᵥ, or M-Oᵥ(OH)₂₋ᵥ, wherein 0<v≤2, as stated previously. The at least partially oxidized precursor can be determined analytically by redox titration to have an oxidation state of at least 2.06. Redox titration is commonly used to determine the oxidation state of various metal ions in a sample. An example of such analytical method is provided in section H) below in this specification.

These oxidative conditions that at least partially oxidize the precursor may involve the presence of an oxidizing agent, such as oxygen (O₂), ozone (O₃), or hydrogen peroxide (H₂O₂). It is found that, an oxidative condition during the co-precipitation process within the claimed scope of the present disclosure facilitates reducing the impurity levels, particularly potassium, in the manufactured precursor.

In some embodiments, the oxidative condition comprising an oxygen-containing atmosphere. An "oxygen-containing atmosphere" refers to an environment where oxygen (O₂) is present as a significant component, such as an atmosphere wherein the oxygen concentration in the reaction vessel space is greater than 5% by volume. The oxygen-containing atmosphere may be a natural environment, such as Earth's atmosphere, which contains approximately 21% oxygen by volume. Thus, in some embodiments, the oxidative condition is achieved without actively supplying any gas feed to the reaction vessel, as the air naturally present within the reactor provides the necessary oxygen. Conducting the method without actively supplying any gas contributes to significant energy savings. Alternatively, the oxidative condition can be provided by feeding air into the reaction vessel during the co-precipitation process. Air is an inexpensive resource that has a particularly positive impact on an industrial scale. The oxygen-containing atmosphere may also be a controlled environment, where oxygen levels are regulated, for example, by controlling the gases feeds. Thus, in some embodiments, the oxidative condition is provided by feeding oxygen-containing gas into the reaction vessel wherein the co-precipitation process is carried out. The oxygen-containing gas may be a mixture of, for example, nitrogen and oxygen, or nitrogen and air, fed together or separately. In such a controlled environment, the oxidation state of the precipitate can be customized to suit specific applications.

According to the present disclosure, the co-precipitation process may be carried out under an oxidative condition throughout its entire duration. Alternatively, in some embodiments, the co-precipitation process may be carried out under non-oxidative conditions for an initial period, after which it transitions to oxidative conditions for the remaining duration. In the initial non-oxidative phase, the absence of an oxidizing agent may help stabilize the existing nuclei without promoting additional nucleation events. Excessive nucleation may result in the formation of numerous small particles that tend to agglomerate, leading to a non-uniform precursor. By maintaining non-oxidative conditions initially, the process allows for controlled particle growth from the existing nuclei. This approach helps in achieving a more uniform particle size distribution and prevents the formation of large agglomerates. In some embodiments, the oxidative condition is provided following a non-oxidative condition.

In some embodiments, it is preferable that the reaction conditions comprise carrying out the co-precipitation at pH 11.8 to 12.5, which may facilitate reduction of alkali metal impurities, especially potassium. pH 12.3-12.5 is even more preferable, as it further reduces sulfate impurities spontaneously.

According to the present disclosure, once the co-precipitation is complete, the resulting slurry can undergo solid-liquid separation, for example by filtrating followed by drying. Optionally, washing may also be performed to further remove surface impurities of the precipitate. By conducting the present method, special dedicated impurity-removal steps or equipment in the post-treatment, as proposed in the art, are not needed, to achieve the desired low impurity levels. Alternatively, the slurry can be stored as is and subjected to solid-liquid separation at a later time, as needed. In such a case, it is preferable to adjust the slurry temperature, for example by heating, to be 75-85° C, to dissolve the crystalline impurities, such as K₂SO₄, into the liquid phase, prior to performing the solid-liquid separation. The washing liquid may be water, or a mixture of water and the precipitant, i.e. KOH solution.

The process conditions outlined in this disclosure have now been found to reduce impurities, particularly alkali metals, in the manufactured precursor. This indicates that the process is not only simple and effective but also highly beneficial for industrial applications. By simple it is meant that reducing impurities can be achieved by simply adjusting the reaction conditions using existing equipment, without the need for special dedicated impurity-removal steps or equipment in the post-treatment. While a normal washing step, as in any conventional process for manufacturing precursors, may still be applicable, the present process further reduces impurities to the extent that an additional washing step or special washing liquid, which would have been necessary otherwise, is no longer required. This indicates that the process is not only effective but also highly beneficial for industrial applications. It eliminates the need for extra special equipment setup or washing liquids for post-treating the precipitated precursor to remove impurities. Consequently, this streamlined approach can lead to significant cost savings and operational efficiencies, making it an attractive option for large-scale manufacturing.

In a second aspect of the present disclosure, it is provided a precursor for cathode active material for lithium-ion batteries, the precursor comprising particles, being presented by a general formula NiₓMn_{y}Co_{z}AₐOᵥ(OH)₂₋ᵥ, wherein 0<v≤2, 0.30≤x≤0.99, 0.01≤y≤0.85, 0.01≤z≤0.40, A being one or more elements, with 0≤a≤0.1, and x+y+z+a=1; and a content of potassium in the precursor is 0-20 ppm, preferably at most 15 ppm, and more preferably at most 10 ppm, as determined by ICP. Preferably, also a content of sodium in the precursor is 0-20 ppm, more preferably at most 15 ppm, and even more preferably at most 10 ppm, as determined by ICP. Even more preferably, a content of alkali metals in the precursor is 0-20 ppm, more preferably at most 15 ppm, and even more preferably at most 10 ppm, as determined by ICP. Preferably v<2, for example v<1.5, v<1.0, v<0.75, or v<0.5. Preferably A is a dopant, more preferably A comprises at least one element selected from the group consisting of Al, Ti, V, Mg, Cr, Ca, Zr, Nb, Mo, Hf, Ta, and W.

In some embodiments, 0<v<2, preferably 0.1≤v≤1.9. In some embodiments, 0.60≤x, preferably 0.70≤x, more preferably 0.90≤x. In some embodiments, y≤0.70, preferably y≤0.50, more preferably y≤0.30. In some embodiments, 0.85≤x and y≤0.10.

The cathode active material precursor particles can be obtained by the method according to the first aspect of the present disclosure.

The precursor, as mentioned, is at least partly oxidized. The methods for determining oxidation state of a material are known to the skilled person, for example by redox titration. The at least partially oxidized precursor can be determined analytically by redox titration to have an oxidation state of at least 2.06. The upper limit of the oxidation state is not particularly restricted. In some cases, to prevent the excessive oxidation which might alter the desired properties of the precursors, and/or depending on the molar ratio between Ni, Mn and Co, the oxidation state may be less than 3.00, for example at most 2.99, at most 2.50, or at most 2.10.

The precursor particles obtained according to the present disclosure may be directly used for manufacturing the cathode active material. The powderous precursor can be mixed with a lithium source so as to obtain a mixture. The mixture is sintered at a temperature between 650°C and 1000°C. Optionally, a heat treatment at a temperature of 105 °C to 750 °C can be performed before the mixing.

Thus, the present disclosure also concerns a use of the precursor obtainable by a method according to the first aspect of the present disclosure, and a use of a precursor according to a further aspect of the present disclosure, for manufacturing a positive electrode active material for secondary batteries.

### EXPERIMENTAL ANALYSIS USED IN THE EXAMPLES AND THE COMPARATIVE EXAMPLES

The following analysis methods are used in the Examples and the Comparative Example:

### A) pH analysis

pH value of a sample was measured by a 780 Metrohm meter calibrated with pH 7 and pH 13 standards. The sample was cooled to 20°C and the pH was measured from the sample by lowering the pH electrode into the sample and waiting for the pH reading to be leveled.

### B) NH_{3(aq)} concentration analysis

The NH_{3(aq)} concentration was measured from a reactor sample by end point titration using an instrument of Metrohm 848 Titrino Plus. One milliliter of sample solution was added to a titration vessel. 30-40 ml of deionized water and 1 ml of 1M NaOH were added. Sample was titrated to the end point by 0.1M HCl.

### C) Particle size distribution (PSD) analysis

The PSD is measured using a Malvern Mastersizer 3000 with Hydro MV wet dispersion accessory after dispersing examples as described herein below of positive electrode (cathode) active material powders in an aqueous medium. To improve the dispersion of the positive electrode active material powder examples, sufficient ultrasonic irradiation and stirring is applied, and an appropriate surfactant is introduced. D50 is defined as the particle size at 50% of the cumulative volume % distribution. Same analogy applies to D10 and D90. A span value refers to a value of (D90-D10)/D50.

### D) Inductively Coupled Plasma Optical Emission Spectrometry (ICP-OES) measurement

The pCAM examples as described herein below are measured by the Inductively Coupled Plasma - Optical Emission Spectrometry (ICP-OES) method using an Agilent ICP 720-OES. 1 gram of a powder sample of each example is dissolved into 50 mL high purity hydrochloric acid in an Erlenmeyer flask. The flask is covered by a watch glass and heated on a hot plate at 380°C until complete dissolution of the sample. After being cooled to room temperature, the solution and the rinsing water of Erlenmeyer flask are transferred to a 250 mL volumetric flask. Afterwards, the volumetric flask is filled with DI water up to the 250 mL mark, followed by complete homogenization. An appropriate amount of solution is taken out by pipette and transferred into a 250 mL volumetric flask for the 2nd dilution, where the volumetric flask is filled with internal standard and 10% hydrochloric acid up to the 250 mL mark and then homogenized. Finally, this solution is used for ICP-OES measurement. The contents/compositions of Ni, Mn, and Co are expressed as mol% of the total of these contents. The content of SO₄ is expressed as % and of K as grams per ton (g/t) or parts per million (ppm), respectively.

### E) Scanning Electron Microscopy (SEM) analysis

The morphology, the primary particle size, aspect ratio, length and thickness, degree of radial orientation, and void area of the positive electrode active material and the precursor are analyzed by using the images from a scanning electron microscopy (SEM) technique. The measurement is performed with a JEOL JSM 7100F under a high vacuum environment of 9.6x10-5 Pa at 25 °C.

### F) Surface area analysis

The specific surface area (SSA) of the samples, including cathode active material precursors and final products, was measured using the standard Brunauer-Emmett-Teller (BET) method according to ISO 9277, performed on a Quantachrome^{®} Autosorb instrument. A powder sample was placed in the sample tube and heated at 90 °C under nitrogen (N2) gas for 2 hours to remove adsorbed species. Before the BET measurement, the sample was degassed at 200 °C for 6 hours to eliminate moisture completely. The instrument conducted the nitrogen adsorption test at 77 K. By obtaining the nitrogen isothermal absorption/desorption curve, the total specific surface area of the sample in m²/g was derived.

### G) Tap density analysis

The tap density (TD) measurement was conducted using a J. Engelsmann Stamping Volumeter STAV II instrument. A graduated measuring cylinder (100 ml) containing the sample (with a mass W, approximately 60-120 g) was mechanically tapped 5000 times, following the ASTM B-527 tap density measurement procedure. The initial powder volume was recorded and tapping continued until no further change in volume (V in cm³) or mass (W in gram) was observed. The TD was calculated as TD = W/V.

### H) Oxidation state titration

The sample is dissolved to (NH₄)₂Fe(SO₄)₂ • 6 H₂O containing sulfuric acid solution, that has excess amount of Fe²⁺. Fe²⁺ is oxidized to Fe³⁺ by Mn⁺. The excess Fe³⁺ is titrated with MnO⁴⁻ solution. One Fe²⁺ ion takes one electron to oxidize so the amount of electrons consumed is calculated for the sample. The average degree of oxidation, i.e. oxidation state, is then calculated based on Ni, Co, and Mn mole amounts per sample.

### EXAMPLES AND COMPARATIVE EXAMPLES

The present disclosure is further illustrated in the following examples and comparative examples.

### Comparative Example 1

A starting solution was prepared by adding 5975 mL of DI water, 75 mL of 220 g/L NH_{3(aq)}, and 500 mL of 95-120 g/L aqueous slurry comprising seed particles being nickel hydroxide and having a D50 of 1.5 µm into a reactor vessel with an effective volume of 8.75 L. The vessel was equipped with a turbine impeller for stirring and a concentrator (i.e. a filtering device) for withdrawing mother liquor from the reactor. The pH of the starting solution was adjusted to 11.6 by the addition of a 200 g/L KOH solution, followed by heating and maintaining the temperature at 75°C throughout the process. Nitrogen gas was supplied at 0.5 L/min through the reactor to prevent oxidation during precipitation reaction.

Next, a precipitation reaction was performed by continuously adding a 120 g/L metal sulfate solution comprising Ni, Mn, and Co (in a stoichiometric molar ratio of Ni:Mn:Co = 90:5:5), a 220 g/L ammonia solution, and a 200 g/L KOH solution, while mixing. During the reaction, the pH value of the reaction mixture in the reactor vessel was kept steady at 12.1 ± 0.1, and a feed rate of the ammonia solution was adjusted so that the NH_{3(aq)} concentration in the reaction mixture was kept steady at 3-5 g/L. The process was carried out in a batchwise manner, with a portion of the mother liquor occasionally being withdrawn from the reactor through the filtering device to continue the reaction. The feeding of the reagents was stopped when the particles reached a median particle size D50 of 5.0 µm. The duration of the process was 32 hours.

1 L of slurry obtained was mixed with 2 L of water and 1 L of 200 g/L KOH solution and then filtered with a Buchner filter. The filtration cake was washed with 10 L of water and 1 L of 200 g/L KOH solution. The wet cake was dried in oven at 120°C under nitrogen gas for 24 hours.

The dried sample was analyzed and the results are shown in Table 2.

### Comparative Example 2

A starting solution was prepared by adding 5775 mL of DI water, 75 mL of 220 g/L NH_{3(aq)}, and 700 mL of the same seed slurry as in Comparative Example 1 into a reactor vessel with an effective volume of 8.75 L. The vessel was equipped with a turbine impeller for stirring and a concentrator (i.e. a filtering device) for withdrawing mother liquor from the reactor. The pH of the starting solution was adjusted to 11.6 by the addition of a 200 g/L KOH solution, followed by heating and maintaining the temperature at 80°C throughout the process. Nitrogen gas was supplied at 0.3 L/min through the reactor to prevent oxidation during precipitation reaction.

Next, a precipitation reaction was performed in the same manner as Comparative example 1 except the temperature. The duration of the process was 34 hours.

1 L of slurry obtained was mixed with 2 L of water and 1 L of 200 g/L KOH solution and then filtered with a Buchner filter. The filtration cake was washed with 10 L of water and 1 L of 200 g/L KOH solution. The wet cake was dried in oven at 120°C under nitrogen gas for 24 hours.

The dried sample was analyzed and the results are shown in Table 2.

### Comparative Example 3

A starting solution was prepared by adding 5870 mL of DI water, 80 mL of 220 g/L NH_{3(aq)}, and 600 mL of the same seed slurry as in Comparative Example 1 into a reactor vessel with an effective volume of 8.75 L. The vessel was equipped with a turbine impeller for stirring and a concentrator (i.e. a filtering device) for withdrawing mother liquor from the reactor. The pH of the starting solution was adjusted to 11.7 by the addition of a 200 g/L KOH solution, followed by heating and maintaining the temperature at 85°C throughout the process. Nitrogen gas was supplied at 0.5 L/min through the reactor to prevent oxidation during precipitation reaction.

Next, a precipitation reaction was performed in the same manner as Comparative example 1 except the temperature. The duration of the process was 27 hours.

1 L of slurry obtained was mixed with 2 L of water and 1 L of 200 g/L KOH solution and then filtered with a Buchner filter. The filtration cake was washed with 10 L of water and 1 L of 200 g/L KOH solution. The wet cake was dried in oven at 120°C under nitrogen gas for 24 hours.

The dried sample was analyzed and the results are shown in Table 2.

### Example 1

A starting solution was prepared by adding 5775 mL of DI water, 75 mL of 220 g/L NH_{3(aq)}, and 700 mL of the same seed slurry as in Comparative Example 1 into a reactor vessel with an effective volume of 8.75 L. The vessel was equipped with a turbine impeller for stirring and a concentrator (i.e. a filtering device) for withdrawing mother liquor from the reactor. The pH of the starting solution was adjusted to 11.6 by the addition of a 200 g/L KOH solution, followed by heating and maintaining the temperature at 75°C throughout the process. No gas feed was supplied.

Next, a precipitation reaction was performed by continuously adding a 120 g/L metal sulfate solution comprising Ni, Mn, and Co (in a stoichiometric molar ratio of Ni:Mn:Co = 90:5:5), a 220 g/L ammonia solution, and a 200 g/L KOH solution, while mixing. During the reaction, the pH value of the reaction mixture in the reactor vessel was kept steady at 12.1 ± 0.1, and a feed rate of the ammonia solution was adjusted so that the NH_{3(aq)} concentration in the reaction mixture was kept steady at 3-5 g/L. The process was carried out in a batchwise manner, with a portion of the mother liquor occasionally being withdrawn from the reactor through the filtering device to continue the reaction. The feeding of the reagents was stopped when the particles reached a median particle size D50 of 5.0 µm. The duration of the process was 34 hours.

1 L of slurry obtained was mixed with 2 L of water and 1 L of 200 g/L KOH solution and then filtered with a Buchner filter. The filtration cake was washed with 10 L of water and 1 L of 200 g/L KOH solution. The wet cake was dried in oven at 120°C under nitrogen gas for 24 hours.

The dried sample was analyzed and the results are shown in Table 2.

### Example 2

A starting solution was prepared by adding 5775 mL of DI water, 75 mL of 220 g/L NH_{3(aq)}, and 700 mL of the same seed slurry as in Comparative Example 1 into a reactor vessel with an effective volume of 8.75 L. The vessel was equipped with a turbine impeller for stirring and a concentrator (i.e. a filtering device) for withdrawing mother liquor from the reactor. The pH of the starting solution was adjusted to 11.6 by the addition of a 200 g/L KOH solution, followed by heating and maintaining the temperature at 80°C throughout the process. No gas feed was supplied.

Next, a precipitation reaction was performed in the same manner as Example 1 except the temperature. The duration of the process was 32 hours.

1 L of slurry obtained was mixed with 2 L of water and 1 L of 200 g/L KOH solution and then filtered with a Buchner filter. The filtration cake was washed with 10 L of water and 1 L of 200 g/L KOH solution. The wet cake was dried in oven at 120°C under nitrogen gas for 24 hours.

The dried sample was analyzed and the results are shown in Table 2.

### Example 3

A starting solution was prepared by adding 5870 mL of DI water, 80 mL of 220 g/L NH_{3(aq)}, and 600 mL of the same seed slurry as in Comparative Example 1 into a reactor vessel with an effective volume of 8.75 L. The vessel was equipped with a turbine impeller for stirring and a concentrator (i.e. a filtering device) for withdrawing mother liquor from the reactor. The pH of the starting solution was adjusted to 11.7 by the addition of a 200 g/L KOH solution, followed by heating and maintaining the temperature at 85°C throughout the process. No gas feed was supplied.

Next, a precipitation reaction was performed in the same manner as Example 1 except the temperature. The duration of the process was 35 hours.

1 L of slurry obtained was mixed with 2 L of water and 1 L of 200 g/L KOH solution and then filtered with a Buchner filter. The filtration cake was washed with 10 L of water and 1 L of 200 g/L KOH solution. The wet cake was dried in oven at 120°C under nitrogen gas for 24 hours.

The dried sample was analyzed and the results are shown in Table 2.

### Example 4

A starting solution was prepared in the same manner as Example 3. Nitrogen gas and air were supplied spontaneously at 0.5 L/min and 0.5 L/min, respectively, through the reactor for the entire duration of the precipitation reaction.

Next, a precipitation reaction was performed in the same manner as Example 3 except the gas feed. The duration of the process was 34 hours.

1 L of slurry obtained was mixed with 2 L of water and 1 L of 200 g/L KOH solution and then filtered with a Buchner filter. The filtration cake was washed with 10 L of water and 1 L of 200 g/L KOH solution. The wet cake was dried in oven at 120°C under nitrogen gas for 24 hours.

The dried sample was analyzed and the results are shown in Table 2.

### Example 5

A starting solution was prepared in the same manner as Example 3. Nitrogen gas was supplied at 0.5 L/min for the first 4 hours, after which the nitrogen gas was stopped and air was supplied at 0.5 L/min for the remaining duration of the precipitation reaction.

Next, a precipitation reaction was performed in the same manner as Example 3 except the gas feed. The duration of the process was 32 hours.

1 L of slurry obtained was mixed with 2 L of water and 1 L of 200 g/L KOH solution and then filtered with a Buchner filter. The filtration cake was washed with 10 L of water and 1 L of 200 g/L KOH solution. The wet cake was dried in oven at 120°C under nitrogen gas for 24 hours.

The dried sample was analyzed and the results are shown in Table 2.

### Example 6

A starting solution was prepared in the same manner as Example 3, except that the pH of the starting solution was adjusted to 12.1. Nitrogen gas was supplied at 0.5 L/min for the first 4 hours, after which the nitrogen gas was stopped and air was supplied at 0.5 L/min for the remaining duration of the precipitation reaction.

Next, a precipitation reaction was performed in the same manner as Example 1 except that the pH value of the reaction mixture in the reactor vessel was kept steady at 12.5 ± 0.1, and a feed rate of the ammonia solution was adjusted so that the NH_{3(aq)} concentration in the reaction mixture was kept steady at 8-10 g/L. The duration of the process was 35 hours.

1 L of slurry obtained was mixed with 2 L of water and 1 L of 200 g/L KOH solution and then filtered with a Buchner filter. The filtration cake was washed with 10 L of water and 1 L of 200 g/L KOH solution. The wet cake was dried in oven at 120°C under nitrogen gas for 24 hours.

The dried sample was analyzed and the results are shown in Table 2.

### Discussion of the results

Table 1 provides an overview of the process features of the examples, including the temperature, the targeted and measured pH values, the gas feed conditions, and the duration of the reaction.

Table 2 provides a summary of the compositional and structural characteristics of the resulting powder product from the examples, including particle size D50, span, specific surface area (BET), tap density, K content and oxidation state.

As shown in Table 2, the potassium contents detected from the Examples 1-6 were significantly lowered than Comparative Examples 1-3. A trend is observed where higher oxygen content corresponds to lower potassium (K) content. The analysis limit for K content in the examples was 10 g/t. It is believed that in Examples 5 and 6, the K content was well below this limit.

It is also observed that the SO₄ content is generally low in all examples. Additionally, by raising the pH, as demonstrated by Example 6, the SO₄ content is further reduced.

Furthermore, it is also observed that the specific surface area in Examples 1-5 generally tend to be higher than Comparative Examples 1-3.

**Table 1**

| Process ID | temperatu re [°C] of the reaction slurry | pH, targeted | pH, measured | N₂ gas feed (L/min) | Air feed (L/min) | Duratio n (hour) |
|---|---|---|---|---|---|---|
| CEX1 | 75 | 12.1 ± 0.1 | 12.06 | 0.5, entire duration | - | 32 |
| CEX2 | 80 | 12.1 ± 0.1 | 12.00 | 0.3, entire duration | - | 34 |
| CEX3 | 85 | 12.1 ± 0.1 | 12.01 | 0.5, entire duration | - | 27 |
| EX1 | 75 | 12.1 ± 0.1 | 12.01 | - | - | 34 |
| EX2 | 80 | 12.1 ± 0.1 | 12.00 | - | - | 32 |
| EX3 | 85 | 12.1 ± 0.1 | 12.06 | - | - | 35 |
| EX4 | 85 | 12.1 ± 0.1 | 12.08 | 0.5, entire duration | 0.5, entire duration | 34 |
| EX5 | 85 | 12.1 ± 0.1 | 11.98 | 0.5, first 4 hours | 0.7, remaining time | 32 |
| EX6 | 85 | 12.5 ± 0.1 | 12.49 | 0.5, first 4 hours | 0.7, remaining time | 35 |

**Table 2**

| Sample ID | Particle size D50 [µm], measured | Span | Specific surface area (BET) [m²/g] | Tap density [g/cm³] | K (g/t) | SO₄ (%) | Oxidati on state |
|---|---|---|---|---|---|---|---|
| CEX1 | 4.9 | 0.341 | 6.52 | 2.08 | 55 | 0.39 | 2.04 |
| CEX2 | 5.0 | 0.332 | 4.73 | 1.93 | 56 | 0.30 | 2.05 |
| CEX3 | 5.0 | 0.474 | 3.67 | 2.06 | 69 | 0.29 | 2.03 |
| EX1 | 4.6 | 0.245 | 8.15 | 2.06 | 15 | 0.57 | 2.09 |
| EX2 | 4.9 | 0.336 | 9.25 | 1.91 | 15 | 0.69 | 2.10 |
| EX3 | 4.7 | 0.266 | 7.46 | 1.99 | 15 | 0.48 | 2.08 |
| EX4 | 4.2 | 0.532 | 8.80 | 1.92 | 12 | 0.51 | 2.09 |
| EX5 | 5.0 | 0.395 | 8.58 | 1.94 | <10 | 0.62 | 2.10 |
| EX6 | 4.3 | 0.519 | 6.09 | 1.93 | <10 | 0.29 | 2.09 |

## Claims

1. A method for manufacturing a particulate material as precursor for cathode active material for lithium-ion batteries, the precursor comprising particles, presented by a general formula NiₓMn_{y}Co_{z}AₐOᵥ(OH)₂₋ᵥ, wherein 0<v≤2, 0.30≤x≤0.99, 0.01≤y≤0.85, 0.01≤z≤0.40, A being one or more elements, with 0≤a≤0.1, and x+y+z+a=1; and
wherein the method comprises carrying out a co-precipitation process by combining and mixing potassium hydroxide solution and metal salt solution under reaction conditions, said reaction conditions comprising an oxidative condition and a temperature of 70-90° C, thereby obtaining a slurry comprising a solid phase and a liquid phase, said solid phase comprising the particulate material.

2. The method according to claim 1, wherein the co-precipitation process includes admixing a complexing agent solution.

3. The method according to any of preceding claims, wherein the oxidative condition comprising an oxygen-containing atmosphere.

4. The method according to any of preceding claims, wherein the oxidative condition comprising feeding an oxygen-containing gas into a reaction vessel wherein the co-precipitation process is carried out.

5. The method according to any of preceding claims, wherein the oxidative condition is provided following a non-oxidative condition.

6. The method according to any of preceding claims, wherein the reaction conditions comprise carrying out the co-precipitation at pH 11.8-12.5, preferably 12.3-12.5, measured at 20°C.

7. The method according to any of preceding claims, further comprising separating the solid phase from the slurry and drying the separated solid phase; preferably before drying, washing is performed; preferably washing is performed using water or an aqueous liquid comprising KOH.

8. The method according to claim 7, further comprising, prior to the separating, adjusting a temperature of the slurry to be 75-85° C.

9. A particulate material as precursor for cathode active material for lithium-ion batteries, the precursor comprising particles, presented by a general formula NiₓMn_{y}Co_{z}AₐOᵥ(OH)₂₋ᵥ, wherein 0<v≤2, 0.30≤x≤0.99, 0.01≤y≤0.85, 0.01≤z≤0.40, A being one or more elements, with 0≤a≤0.1, and x+y+z+a=1; and a content of potassium in the particulate material is 0-20 ppm, preferably at most 15 ppm, and more preferably at most 10 ppm, as determined by ICP.

10. The particulate material according to claim 9, wherein a content of sodium in the particulate material is 0-20 ppm, preferably at most 15 ppm, and more preferably at most 10 ppm, as determined by ICP; preferably, a content of alkali metals in the particulate material is 0-20 ppm, more preferably at most 15 ppm, and even more preferably at most 10 ppm, as determined by ICP.

11. The particulate material according to claim 9 or 10, obtained by the method according to any of claims 1-8.

12. The particulate material according to any of claims 9-11, having an average degree of oxidation of at least 2.06, as determined by redox titration.

13. The particulate material according to any of claims 9-12, wherein 0<v<2, preferably 0.1≤v≤1.9; and/or
wherein 0.60≤x, preferably 0.70≤x, more preferably 0.90≤x; and/or
wherein y≤0.70, preferably y≤0.50, more preferably y≤0.30; and/or
wherein 0.85≤x and y≤0.10.

14. A method of manufacturing a cathode active material, comprising the steps of:
- mixing the particulate material according to any of claims 9 to 13 or obtained by the method according to any of claims 1-8, a lithium source, and optionally a dopant source to obtain a mixture,
- heating the mixture in oxidizing atmosphere at a temperature between 650°C to 1000°C to obtain the cathode active material, and optionally,
- the method further comprising a heat treatment step before the mixing, wherein the particulate material is heated at a temperature of 105 °C to 750 °C.

15. The method of manufacturing the cathode active material according to claim 14, further comprising preparation steps of:
- conducting the method according to any of claims 1-8,
- processing the slurry by filtering, washing, and drying,
thereby obtaining the particulate material.
